# EUROPEAN PATENT APPLICATION

(11) **EP 3 986 085 A1**
(43) Date of publication of application: **20.04.2022**
(21) Application number: 19937818.3
(22) Date of filing: 12.07.2019
(51) Int. Cl.: H04W 76/19, H04W 76/27

(54) **INFORMATION FEEDBACK METHOD, DEVICE, AND STORAGE MEDIUM**

(71) Applicant: GUANGDONG OPPO MOBILE TELECOMMUNICATIONS CORP., LTD., Dongguan, Guangdong 523860 (CN)
(72) Inventor: YANG, Ning, Dongguan, Guangdong 523860 (CN); WANG, Shukun, Dongguan, Guangdong 523860 (CN)
(74) Representative: Penza, Giancarlo
(86) International application number: PCT/CN2019/095879
(87) International publication number: WO 2021/007729

(57) **Abstract**

Disclosed is an information feedback method, comprising: if a terminal device returns to an idle state exceptionally, said terminal device obtaining relevant information regarding the exceptional return to an idle state; the terminal device, when establishing a connection with a network device again, sending the relevant information to the network device. Also disclosed by the present invention are another information feedback method, device, and storage medium.

## Description

### Technical Field

The present invention relates to the technical field of wireless communication, and in particular, to a method for information feedback, a device, and a storage medium.

### Background

In a New Radio (NR) system, a state of a terminal device includes an IDLE state, an INACTIVE state, and a CONNECTED state. When the terminal device performs a connection re-establishment process, or when the terminal device is in the INACTIVE state, it may be possible for the terminal device to return to the IDLE state due to an abnormal reason, which is also called abnormally returning to the IDLE state. Therefore, how to perform network system parameter optimization, and prevent the terminal device from returning to the IDLE state due to an abnormal reason is an urgent problem to be solved.

### Summary

To solve the above technical problem, embodiments of the present invention provide a method for information feedback, a device, and a storage medium, which can prevent a terminal device from returning to an IDLE state due to an abnormal reason.

In a first aspect, an embodiment of the present invention provides a method for information feedback, including: acquiring, by a terminal device, related information of abnormally returning to an idle state when the terminal device returns to the idle state abnormally; and sending, by the terminal device, the related information to a network device in a case that the terminal device re-establishes a connection with the network device.

In a second aspect, an embodiment of the present invention provides a method for information feedback, including: receiving, by a network device, related information of abnormally returning to an idle state sent by a terminal device; wherein the related information is acquired by the terminal device when the terminal device returns to the idle state abnormally, and is sent in a case that a connection is re-established with the network device.

In a third aspect, an embodiment of the present invention provides a terminal device, including: a processing unit, configured to acquire related information of abnormally returning to an idle state when the terminal device returns to the idle state abnormally; and a first sending unit, configured to send the related information to a network device in a case that the terminal device re-establishes a connection with a network device.

In a fourth aspect, an embodiment of the present invention provides a network device, including: a second receiving unit, configured to receive related information of abnormally returning to an idle state sent by a terminal device; wherein the related information is acquired by the terminal device when the terminal device returns to the idle state abnormally, and is sent in a case that a connection is re-established with the network device.

In a fifth aspect, an embodiment of the present invention provides a terminal device, including a processor and a memory configured to store a computer program which is capable of being run on the processor, wherein the processor is configured to execute the acts of the above method for information feedback performed by the terminal device, when running the computer program.

In a sixth aspect, an embodiment of the present invention provides a storage medium, storing an executable program which, when being executed by a processor, implements the above method for information feedback performed by a network device.

A method for information feedback provided by an embodiment of the present invention includes: acquiring, by a terminal device, related information of abnormally returning to an idle state in a case that the terminal device returns to the idle state abnormally; and sending the related information to a network device when the terminal device re-establishes a connection with the network device. In this way, the terminal device reports the related information of abnormally returning to the idle state to the network device, thus the network device is enabled to optimize a network system parameter, and the terminal device is prevented from abnormally returning to the idle state again due to a same reason.

### Brief Description of Drawings

FIG. 1 is a schematic diagram of information reporting of a first category and a second category in the present invention.
FIG. 2 is a schematic diagram of a flow for information reporting of a third category in the present invention.
FIG. 3 is a schematic diagram showing a relationship among an inactive state, an idle state, and a connected state in the present invention.
FIG. 4 is a schematic diagram of a terminal device entering an inactive state from a connected state.
FIG. 5 is a schematic diagram of a processing flow of a terminal device resuming a connection with a network device in the present invention.
FIG. 6 is a schematic diagram of a structure of a communication system according to an embodiment of the present invention.
FIG. 7 is a schematic diagram of an optional processing flow of a method for information feedback, which is applied to a terminal device, according to an embodiment of the present invention.
FIG. 8 is a schematic flow chart of a terminal device performing a re-establishment according to an embodiment of the present invention.
FIG. 9 is a schematic diagram of a relationship between T311 and a state of a terminal device according to an embodiment of the present invention.
FIG. 10 is a schematic diagram of a relationship between T301 and a state of a terminal device according to an embodiment of the present invention.
FIG. 11 is a schematic diagram of a structure of a terminal device according to an embodiment of the present invention.
FIG. 12 is a schematic diagram of a composition structure of a network device according to an embodiment of the present invention.
FIG. 13 is a schematic diagram of a hardware composition structure of an electronic device of an embodiment of the present invention.

### Detailed Description

To understand features and technical contents of embodiments of the present invention in more detail, implementations of the embodiments of the present invention will be described in detail below with reference to accompanying drawings, and the accompanying drawings are used for reference only and are not intended to limit the embodiments of the present invention.

Before a method for information feedback according to an embodiment of the present invention is described in detail, reporting, by a terminal device, information to a network device in the related art is described briefly first.

In cellular networks such as Long Term Evolution (LTE) and NR, etc., a terminal device operates according to a network configuration, no matter in an idle state, an inactive state, or a connected state. If the terminal device is in the idle state, the terminal device performs cell selection and cell reselection according to the network configuration. If the terminal device is in the inactive state, the terminal device performs RAN Notification Area (RNA) updating according to the network configuration. If the terminal device is in the connected state, the terminal device performs operations such as a bearer establishment, a data transmission, and cell handover according to the network configuration. For each operation, the terminal device needs to report information to the network device, and reporting, by the terminal device, information to the network device may be divided into the following three categories in general.

A first category is basic reporting by the terminal device.

In the basic reporting by the terminal device, the information reported by the terminal device to the network device is information that the terminal device needs to report for completing a basic operation. For example, the terminal device expects the network device to give a measurement report of a handover command in time, and the terminal device expects the network device to give a scheduling request of uplink data scheduling and/or a Buffer Status Report (BSR) in time.

A second category is reporting by the terminal device in assisting in network device optimization.

In a current wireless network, there are thousands of network parameters, so in a process of network parameter configuration, problems of complex parameter configuration, and difficult coordination or mismatching-prone of part of parameters may exist. Based on this problem, in research processes of the LTE and the NR, operators put forward a concept of Self-Optimization Network (SON), expecting that, through parameter reporting of a terminal and statistical information of a network, the network is enabled to automatically plan and optimize the network parameters based on these pieces of information.

In order to optimize the network, modes of Minimization of Drive Tests (MDT), Radio Link Failure (RLF) Report, Connection Establishment Failure (CEF) Report, and the like are introduced in LTE and NR networks. The terminal device reports information aiming at different scenarios, which can assist the network device to determine a cause of problem, and optimize the network by adjusting a parameter.

Among them, the MDT focuses on a problem of coverage, such as a network coverage hole, weak coverage, pilot pollution, over-coverage, coverage overlapping, and uplink coverage. Information is collected from two aspects (the network device and the terminal device), the problem is determined, and network parameters are adjusted and network configuration is optimized. Information mainly reported by the terminal device includes: a Reference Signal Receiving Power (RSRP) of a cell, a Reference Signal Receiving Quality (RSRQ), a beam RSRP or a beam RSRQ, location information, or time information, etc.

RLF Report focuses on reporting for cases when a problem related to wireless link failure or handover failure happens, so that the network device can determine a reason which causes a problem of wireless link failure or handover failure, and optimize network parameters. The information mainly reported by the terminal device includes the RSRP or the RSRQ of a serving cell, the location information, or the like.

CEF Report focuses on reporting for cases when a problem related to connection establishment failure happens, so that the network device can determine a reason which causes a problem of connection establishment failure, and optimize access of the terminal device. The information mainly reported includes a cell Identifier (ID) in which a failure occurs, the RSRP or the RSRQ of the serving cell, the location information, a time stamp, the number of attempted random access Preamble, a maximum transmit power, or the like.

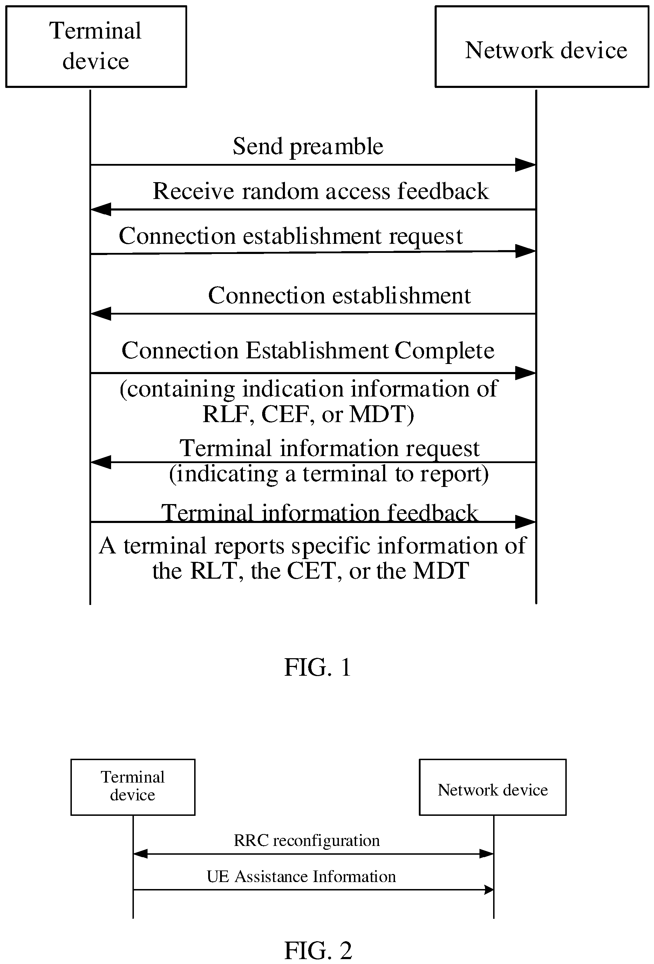

Basic flows of recording the MDT, the RLF Report and the CEF Report in the above information reporting are relatively similar. The flow of information reporting of a first category and a second category is as shown in FIG. 1, the terminal device may carry indication information in a connection establishment complete message (RRC Connection Establishment Complete), the indication information indicates that the terminal device has stored data of the MDT, an RLF, or a CEF. After receiving the indication information, the network device may send a UE Information Request message to the terminal device, to trigger the terminal device to report the stored data. After receiving the UE Information Request message, the terminal device may report the stored data to the network device through a UE Information Response message.

A third category is reporting of terminal device experience optimization.

The reporting of the first category and the reporting of the second category are both reporting performed aiming at the network parameters, that is, all measurements and reports of the terminal device are for optimizing the network. In a protocol design, there is further a kind of reporting performed aiming at a status of the terminal device, which is called UE Assistance Information reporting, that is, the third category of information reporting. In the third category of information reporting process, as shown in FIG. 2, the network device configures the terminal device to report through a reconfiguration message, and the terminal device completes UE Assistance Information reporting to the network device.

In an LTE system, the terminal device introduces three kinds of UE Assistance Information reporting, which are respectively as follows.
1) The first is a power optimization configuration that the terminal device tends to have, which is mainly used for expecting the network device to configure a more power-saving network configuration for the terminal device, when a power of the terminal device is relatively low.
2) The second is a maximum bandwidth of a Physical Downlink Shared Channel (PDSCH) or a Physical Uplink Shared Channel (PUSCH) that the terminal device tends to have, which is mainly used for expecting the network device to transmit data according to a small bandwidth actually expected by the terminal device, aiming at a case in which a Machine-Type Communication (MTC) terminal device has a relatively small amount of data and wants to save the power.
3) The third is a terminal device overheating indication, which is mainly used for, when overheating occurs in the terminal device, expecting, through this indication and a given tended parameter, the network device to configure the terminal device according to the parameter, so as to reduce heat of the terminal device.

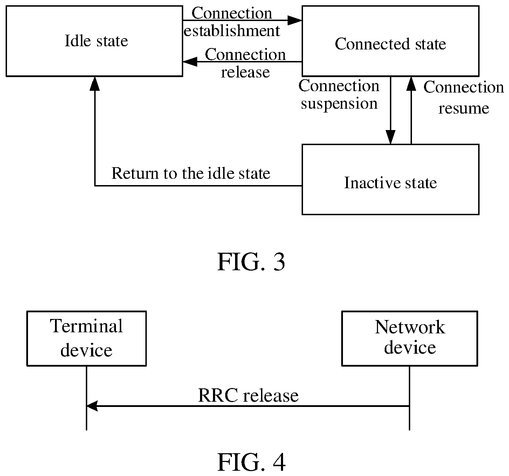

In the NR system, assistance information similar to the above UE Assistance Information is also introduced. Furthermore, in the NR network, in addition to the idle state and the connection state existing in the LTE system, the terminal device further has a new state-the inactive state. The inactive state is an intermediate state between the idle state and the connected state. Main functions of the terminal device in the inactive state include: Public Land Mobile Network (PLMN) selection, cell selection, receiving system information, receiving RAN paging messages, etc. The terminal device in the inactive state can reserve a context of the terminal device on the network side, and can resume a connection as soon as possible when the terminal device has data to be transmitted, and further can reduce frequency of measurement and reporting by the terminal device, thus reducing power consumption of the terminal device. A schematic diagram of a relationship among the three states, an inactive state, an idle state, and a connected state, is shown in FIG. 3. A terminal device enters the connected state from the idle state through connection establishment, and enters the idle state from the connected state through connection release; the terminal device enters the inactive state from the connected state through connection suspension, and enters the connected state from the inactive state through connection resume; and the terminal device may also enter the idle state from the inactive state. A schematic diagram of a terminal device entering an inactive state from a connected state is as shown in FIG. 4. The network device sends a Radio Resource Control (RRC) Release message to a terminal device, to enable the terminal device enter the inactive state.

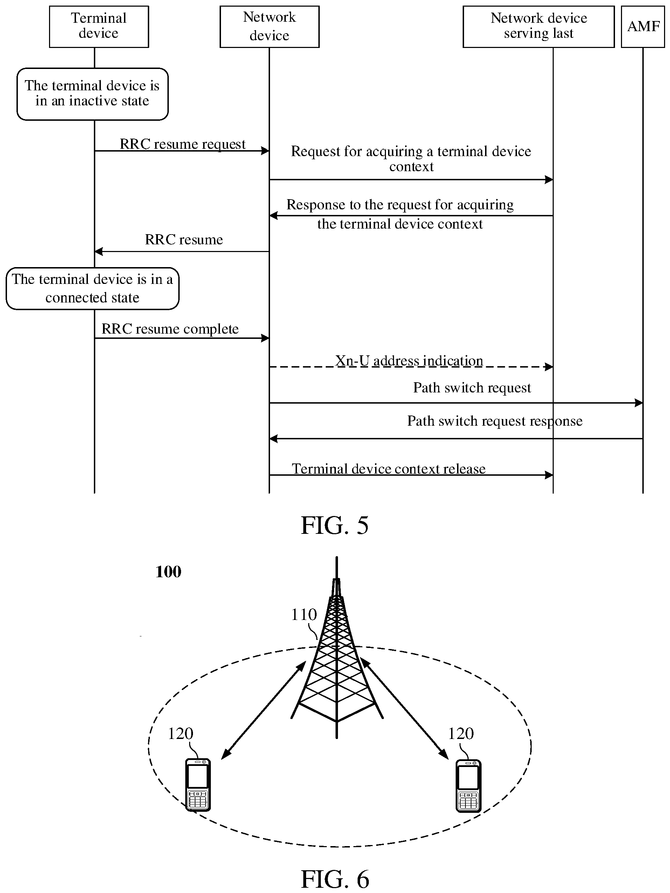

When a terminal device needs to perform data transmission, the terminal device resumes a connection with the network device through a resume process, so as to perform the data transmission. A processing flow diagram of a terminal device resuming a connection with a network device is as shown in FIG. 5. A terminal device in an inactive state sends an RRC resume request to a network device, and the network device sends a request for acquiring a UE context to a network device which serves the terminal device last. The network device initiates connection resume to the network device after acquiring the UE context. After the UE is in a connected state, the UE sends an RRC resume complete message to the network device. The network device sends a path switch request to an Authentication Management Function (AMF) entity. After receiving the path switch request response, the network device requests a network device which serves the terminal device last to release the UE context.

In the related art, reporting of abnormal information by the terminal device mainly aims at a coverage problem, a wireless link failure problem, and an abnormal connection establishment problem. However, in a wireless network, when the terminal device is in a connection establishment or a connection re-establishment, or the terminal device is in the inactive state, the terminal device may be caused to return to the idle state abnormally due to various reasons, wherein that the terminal device returns to the idle state abnormally is an abnormal event. However, reporting aiming at an abnormal event has not been defined yet currently.

Based on the above problem, a method for information feedback is provided in the present invention. A method for information feedback according to an embodiment of the present application may be applied to various communication systems, such as a Global System of Mobile communication (GSM) system, a Code Division Multiple Access (CDMA) system, a Wideband Code Division Multiple Access (WCDMA) system, a General Packet Radio Service (GPRS), an LTE system, an LTE Frequency Division Duplex (FDD) system, LTE Time Division Duplex (TDD), a Universal Mobile Telecommunication System (UMTS) system, a Worldwide Interoperability for Microwave Access (WiMAX) communication system, or a 5G system.

Illustratively, a communication system 100 applied in an embodiment of the present application is shown in FIG. 6. The communication system 100 may include a network device 110, which may be a device that communicates with terminal devices 120 (or referred to as communication terminals, or terminals). The network device 110 may provide communication coverage for a specific geographical area, and may communicate with terminal devices located within the coverage area. Optionally, the network device 110 may be a base transceiver station (BTS) in a GSM system or CDMA system, or a NodeB (NB) in a WCDMA system, or an Evolutional Node B (eNB or eNodeB) in an LTE system, or a radio controller in a cloud radio access network (CRAN). Or the network device may be a mobile switching center, a relay station, an access point, a vehicle-mounted device, a wearable device, a hub, a switch, a bridge, a router, a network side device in a 5G network, or a network device in a future evolved public land mobile network (PLMN).

The communication system 100 further includes at least one terminal device 120 located within a coverage range of the network device 110. As used herein, the term "terminal device" includes, but is not limited to, a device configured to receive/send a communication signal via a wired circuit, for example, via a Public Switched Telephone Network (PSTN), a Digital Subscriber Line (DSL), a digital cable, a direct cable; and/or another data connection/network; and/or via a wireless interface, for instance, for a cellular network, a Wireless Local Area Network (WLAN), a digital television network such as a Digital Video Broadcasting-Handheld (DVB-H) network, a satellite network, or an AM-FM broadcast transmitter; and/or another terminal device; and/or an Internet of Things (IoT) device. A terminal device configured to communicate via a wireless interface may be referred to as "a wireless communication terminal", "a wireless terminal" or "a mobile terminal". Examples of the mobile terminal include, but are not limited to, a satellite or cellular phone; a personal communication system (PCS) terminal capable of combining a cellular radio phone with data processing, facsimile, and data communication abilities; a personal digital assistant (PDA) that may include a radio phone, a pager, internet/intranet access, a Web browser, a memo pad, a calendar, and/or a Global Positioning System (GPS) receiver; and a conventional laptop and/or palmtop receiver or other electronic devices including a radio phone transceiver. The terminal device may refer to an access terminal, user equipment (UE), a subscriber unit, a subscriber station, a mobile station, a rover station, a remote station, a remote terminal, a mobile device, a user terminal, a terminal, a wireless communication device, a user agent, or a user apparatus. The access terminal may be a cellular phone, a cordless phone, a Session Initiation Protocol (SIP) phone, a Wireless Local Loop (WLL) station, a Personal Digital Assistant (PDA), a handheld device with a wireless communication function, a computing device, or other processing devices connected to a wireless modem, a vehicle-mounted device, a wearable device, a terminal device in a 5G network, or a terminal device in a future evolved Public Land Mobile Network (PLMN), etc.

Optionally, Device to Device (D2D) communication may be performed between the terminal devices 120.

Optionally, the 5G system or 5G network may also be referred to as a New Radio (NR) system or an NR network.

FIG. 6 illustrates one network device and two terminal devices. Optionally, the communication system 100 may include multiple network devices, and other quantities of terminal devices may be included within the coverage range of each network device, which is not limited in the embodiments of the present application.

Optionally, the communication system 100 may include other network entities, such as a network controller and a mobile management entity, which are not limited in the embodiments of the present application.

It should be understood that a device with a communication function in a network/system in an embodiment of the present application may be referred to as a communication device. Taking the communication system 100 shown in FIG. 6 as an example, the communication device may include a network device 110 and terminal devices 120 which have communication functions, wherein the network device 110 and the terminal devices 120 may be the specific devices described above, and will not be described repeatedly herein. The communication device may also include another device in the communication system 100, for example other network entities, such as a network controller and a mobile management entity, which is not limited in the embodiments of the present application.

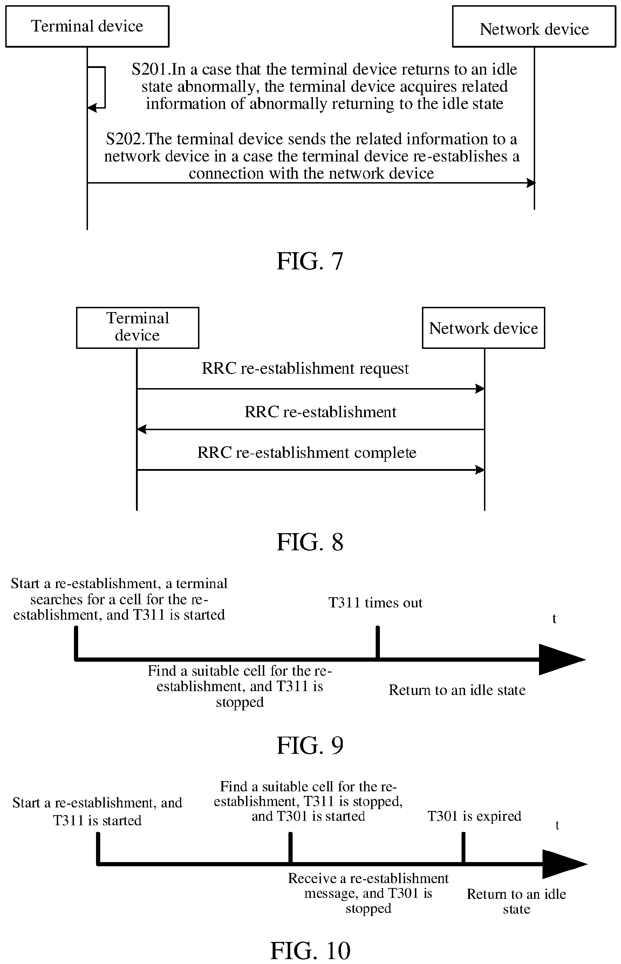

A schematic diagram of an optional processing flow of a method for information feedback, which is applied to the terminal device, according to an embodiment of the present invention, as shown in FIG. 7, includes the following acts S201 to S202.

In act S201, the terminal device acquires related information of abnormally returning to the idle state, when the terminal device returns to the idle state abnormally.

In act S202, in a case that the terminal device re-establishes a connection with the network device, it sends the related information to the network device.

In the above act S201, there are at least two kinds of cases in which the terminal device returns to the idle state abnormally, respectively namely: the terminal device returns to the idle state due to failing in performing a re-establishment, and the terminal device directly returns to the idle state from the inactive state.

In the following, it will be described that in a case that the terminal device returns to the idle state due to failing in performing the re-establishment, the terminal device acquires related information of returning to the idle state.

The terminal device may perform a Re-establishment process in the following several cases.

When it is detected that the RLF occurs, the terminal device may perform the Re-establishment process. When it is detected that HOF occurs, the terminal device may perform the Re-establishment process. When it is detected that a synchronous reconfiguration is failed, the terminal device may perform the Re-establishment process. When it is detected that an asynchronous reconfiguration is failed, the terminal device may perform the Re-establishment process. When it is detected that Integrity protection (Integrity Check) of a re-establishment message is failed, the terminal device may perform the Re-establishment process.

A schematic flow chart of performing, by the terminal device, a re-establishment is as shown in FIG. 8, the terminal device sends a re-establishment request message to the network device, the network device indicates the terminal device to perform a cell re-establishment, and the terminal device sends a re-establishment complete message to the network device. However, in the process of performing the re-establishment, the terminal device may fail in re-establishing in the following cases.

In a first case, RRC security is not started. In a second case, a re-establishment timer (T311) is expired, which indicates that there is no way for the terminal device to select a cell for the re-establishment. In a third case, a re-establishment message receiving timer (T301) is expired, which indicates that the terminal device cannot receive the RRC re-establishment message when the terminal device performs reestablishing. In a fourth case, Integrity Protection of an RRC re-establishment message is failed.

For the first case, the RRC security is not started, it may be because the network device does not want the terminal device to access in the re-establishment process, thus the RRC security is not started; or it may be because for a purely signaling-related process, the network device considers that it is not necessary to start the RRC security for the re-establishment. Therefore, that the RRC security is not started is an normal behavior of the network device.

For the second case, a schematic diagram of a relationship between T311 and a state of the terminal device is as shown in FIG. 9. The terminal device starts the T311 when starting a cell re-establishment, and terminates the T311 if the terminal device selects a suitable cell for a re-establishment in a re-establishment process; otherwise, until the T311 is expired or the T311 is invalid, the terminal device enters the idle state. The invalidation of the T311 indicates that the terminal device cannot select a suitable cell for the re-establishment in the re-establishment process.

In a case that the T311 is expired or is invalid, the terminal device records at least one piece of the following related information of returning to idle state abnormally: a reason for invalidation of the re-establishment timer is that the re-establishment timer is expired, location information when the re-establishment timer is expired, time stamp information when the re-establishment timer is expired, measurement information of the serving cell, or measurement information of a neighboring cell.

Among them, the measurement information includes a measurement parameter for a cell, and/or a measurement parameter for a strongest beam of the cell; and the measurement parameter includes at least one of the following: a Reference Signal Receiving Power (RSRP), a Reference Signal Receiving Quality (RSRQ), or a Signal to Interference plus Noise Ratio (SINR). Therefore, the measurement information of the serving cell at least includes: at least one of the RSRP, the RSRQ, the SINR of the strongest beam of the serving cell, the RSRP, the RSRQ, and the SINR of the serving cell. The measurement information of the neighboring cell at least includes: at least one of the RSRP, the RSRQ, the SINR of the strongest beam of the neighboring cell, the RSRP, the RSRQ, and the SINR of the neighboring cell.

For the third case, a schematic diagram of a relationship between T301 and a state of the terminal device is as shown in FIG. 10. The terminal device starts the T301 when sending a re-establishment request message (an RRC Reestablishment Request) to the network device, and terminates the T301 if the terminal device receives a re-establishment message (an RRC Reestablishment) sent by the network device before the T301 is invalid; and if the terminal device does not receive the RRC Reestablishment sent by the network device before the T301 is invalid or is expired, the terminal device enters the idle state. There are at least two kinds of reasons why the terminal device has not received the RRC Reestablishment. One is that the network device has received the RRC Reestablishment Request sent by the terminal device, but the network device has not fed back the RRC Reestablishment to the terminal device. The other is that the network device may not receive the RRC Reestablishment Request sent by the terminal device duo to some reasons.

In a case that the T301 is expired or is invalid, the terminal device records at least one piece of the following related information of abnormally returning to the idle state: a re-establishment cell identifier, a reason why the terminal device returns to the idle state, a Preamble used by the terminal device to send the re-establishment request message to the network device, a Synchronization Signal Block (SSB) used by the terminal device to send the re-establishment request message to the network device, a maximum transmit power used by the terminal device to send the re-establishment request message to the network device, or the number of attempts of the preamble on the SSB. Among them, a reason why the terminal device returns to the idle state includes that the T301 is expired, or the terminal device has not received the RRC Reestablishment.

For the fourth case, after the terminal device is re-established to a certain cell, if the re-establishment is successful, the cell needs to acquire context information of the terminal device at the original service cell of the terminal device. Herein, the context information includes Integrity Protection information. Furthermore, it is also necessary to calculate an Integrity Protection key. If the calculated integrity key does not match an integrity key of the terminal device, Integrity Protection of the RRC re-establishment message is failed, and the terminal device returns to the idle state.

Since the Integrity Protection failure of the RRC re-establishment message involves the Integrity Protection key that has been stored by the terminal device and various pieces of information of the re-establishment cell, in a case that the Integrity Protection of the RRC re-establishment message is failed, the terminal device records at least one piece of the following related information of abnormally returning to the idle state: a reason why the terminal device returns to the idle state is the Integrity Protection failure of the re-establishment message, a re-establishment Cell ID with Integrity Protection failure, a Physical Cell ID (PCI) and/or an Absolute Radio Frequency Channel Number (ARFCN) of the re-establishment cell, the Integrity Protection key that has been stored by the terminal device, or a Next Hop Chaining Count (NCC). Among them, the NCC is used for updating the key used by the terminal device.

In the following, it will be described that in a case that the terminal device directly returns to the idle state from the inactive state, the terminal device acquires the related information of returning to the idle state.

In the NR system, when terminal device is in the inactive state, there is usually no too strong reason to return to the idle state. Unless the terminal device reselects another access system, the terminal device returns to the idle state; or after the terminal device resumes to the connected state, the network device actively releases the terminal device into the idle state.

Cases that the terminal device returns to the idle state from the inactive state due to an abnormal event (i.e., the terminal device returns to the idle state abnormally) may include the following cases.

A first case is that, when the terminal device initiates an RRC Resume Request, T319 is started, but the T319 is expired or is invalid. A second case is that, the terminal device receives a paging message of a core network. A third case is that, after the terminal device sends the RRC Resume Request, Integrity Protection verification of RRC Resume sent by the network device is failed.

For the first case, that the T319 is expired indicates that the terminal device has not received the RRC Resume after sending the RRC Resume Request. The terminal device may record one or more pieces of information such as the number of random accesses of the terminal device, a maximum transmit power, or whether a collision occurs.

For the second case, when the terminal device is in the inactive state, if the network device sends data to the terminal device, the network device should first search for the terminal device through Radio Access Network (RAN) paging. Only in a case that the RAN paging is failed and the network device cannot find the terminal device, the network device falls back to a core network paging mode to search for the terminal device within a wider range. Therefore, when the terminal device receives the core network paging in the inactive state, the terminal device may record at least one piece of the following related information of abnormally returning to the idle state: serving cell information of the terminal device, wireless area information (RAN Notification Area, RNA) in the inactive state, measurement information of the serving cell, or measurement information of the neighboring cell. Among them, the serving cell information of the terminal device may be current serving cell information of the terminal device, such as a serving cell ID. The serving cell ID includes a physical cell ID and/or a global cell ID. RNA information in the inactive state includes: an RNA ID and/or a contained cell ID.

Among them, the measurement information includes the measurement parameter for the cell, and/or the measurement parameter for the strongest beam of the cell. The measurement parameter includes at least one of the following: the RSRP, the RSRQ, or the SINR. Therefore, the measurement information of the serving cell at least includes: at least one of the RSRP, the RSRQ, the SINR of the strongest beam of the serving cell, the RSRP, the RSRQ, and the SINR of the serving cell. The measurement information of the neighboring cell at least includes: at least one of the RSRP, the RSRQ, the SINR of the strongest beam of the neighboring cell, the RSRP, the RSRQ, and the SINR of the neighboring cell.

For the third case, when a certain cell is resumed, the cell needs to calculate the Integrity Protection key based on the context information of the terminal device. If the calculated integrity key does not match the integrity key of the terminal device, Integrity Protection of an RRC connection resume message is failed, and the terminal device returns to the idle state.

Since the Integrity Protection failure of the RRC connection resume message involves the Integrity Protection key that has been stored by the terminal device and various pieces of information of the resume cell, in a case that the Integrity Protection of the RRC connection resume message is failed, the terminal device records at least one piece of the following related information of abnormally returning to the idle state: a reason why the terminal device returns to the idle state is Integrity Protection failure of a connection resume message, a resume Cell ID with Integrity Protection failure, a PCI and/or an ARFCN of the resume cell, the Integrity Protection key that has been stored by the terminal device, or the NCC. Among them, the NCC is used for updating the key used by the terminal device.

In the above act S202, when the terminal device sends the related information to the network device, the related information of abnormally returning to the idle state may be carried when the terminal device reports terminal information to the network device.

In some embodiments, the terminal device receives a reconfiguration message sent by the network device before sending the related information of abnormally returning to the idle state to the network device, wherein the reconfiguration message indicates whether the terminal may send related abnormal information or abnormal indication information. The terminal device may send terminal assistance information to the network device based on the reconfiguration message. The terminal assistance information carries the abnormal indication information or the abnormal information, wherein the abnormal indication information indicates that the terminal device has stored related information of abnormally returning to the idle state.

In some other embodiments, the terminal device may report the related information of abnormally returning to the idle state to the network device according to reporting modes of the RLF, the CEF, and the MDT in the prior art. That is, according to the processing flow shown in FIG. 1, the indication information is carried in a connection establishment request message or a connection establishment complete message, indicating that the terminal device has stored the related information of abnormally returning to the idle state; and then that the terminal device has stored the related information of abnormally returning to the idle state is reported in subsequent terminal information reporting.

For the method for information feedback provided according to an embodiment of the present invention, in a case that the terminal device returns to the idle state due to an abnormal reason when the terminal device performs the connection re-establishment or when the terminal device is in the inactive state, information that the terminal device needs to record and how to report the recorded information to the network device are clarified, so that the terminal device can report the related information that the terminal device returns to the idle state due to an abnormal reason to the network device, thereby the network device is enabled to further optimize a system parameter, thus avoiding recurrence of such events.

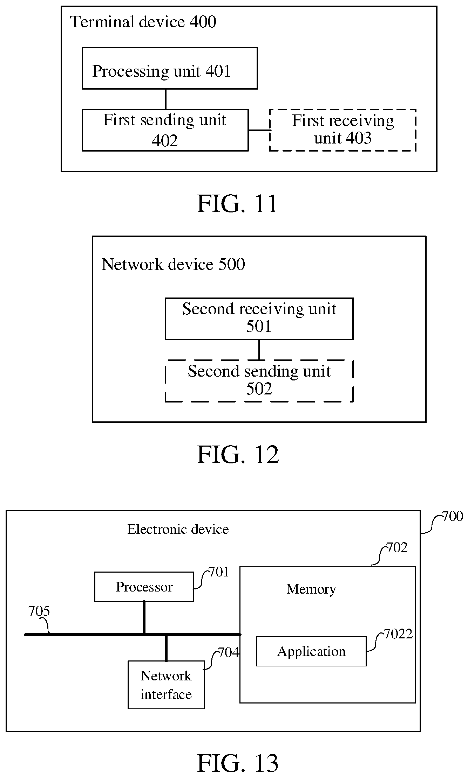

In order to implement the above method for information feedback, an embodiment of the present invention provides a terminal device. As shown in FIG. 11, a composition structure of the terminal device 400 includes: a processing unit 401, configured to acquire related information of abnormally returning to an idle state in a case that the terminal device returns to the idle state abnormally; and a first sending unit 402, configured to send the related information to a network device in a case that the terminal device re-establishes a connection with the network device.

In some embodiments, abnormally returning to the idle state includes: the terminal device returns to the idle state due to a failure of performing a re-establishment.

In a case that abnormally returning to the idle state is that the terminal device returns to the idle state due to the failure of performing the re-establishment, the related information includes at least one of the following: a reason for invalidation of a re-establishment timer is that the re-establishment timer is expired, location information when the re-establishment timer is expired, time stamp information when the re-establishment timer is expired, or measurement information of a serving cell and/or a neighboring cell. Or, the related information includes at least one of the following: a re-establishment cell identifier, a reason why the terminal device returns to the idle state, a preamble used by the terminal device to send a re-establishment request message to the network device, an SSB used by the terminal device to send the re-establishment request message to the network device, a maximum transmit power used by the terminal device to send a re-establishment request message to the network device, or the number of attempts of a preamble on the SSB. Herein, the reason why the terminal device returns to the idle state includes: a re-establishment message receiving timer is expired, or the terminal device has not received a re-establishment message. Or, the related information includes at least one of the following: the reason why the terminal device returns to the idle state is Integrity Protection failure of a re-establishment message, the re-establishment cell identifier with Integrity Protection failure, a PCI and/or an ARFCN, an Integrity Protection key that has been stored by the terminal device, or an NCC.

In some other embodiments, abnormally returning to the idle state includes: the terminal device directly returns to the idle state from an inactive state.

When abnormally returning to the idle state is that the terminal device directly returns to the idle state from the inactive state, the related information includes at least one of the following: the reason why the terminal device returns to the idle state is Integrity Protection failure of a connection resume message, the re-establishment cell identifier with Integrity Protection failure, the PCI and/or the ARFCN, the Integrity Protection key that has been stored by the terminal device, or the NCC. Or, when the terminal device receives a core network paging in the inactive state, the related information includes at least one of the following: serving cell information of the terminal device, wireless area information under the inactive state, or measurement information of a serving cell and/or a neighboring cell.

In an embodiment of the present invention, current serving cell information of the terminal device includes: a current serving cell identifier of the terminal device.

In an embodiment of the present invention, the wireless area information includes: a wireless area identifier, and/or a cell identifier contained in a wireless area.

In an embodiment of the present invention, the measurement information includes: a measurement parameter for a cell, and/or a measurement parameter for a strongest beam of the cell. Among them, the measurement parameter includes at least one of the following: an RSRP, an RSRQ, or an SINR.

In an embodiment of the present invention, the first sending unit 402 is configured to report terminal information to the network device, wherein the terminal information carries the related information.

In an embodiment of the present invention, the terminal device further includes: a first receiving unit 403, configured to receive a reconfiguration message sent by the network device; and the first sending unit 402 is configured to send terminal assistance information to the network device based on the reconfiguration message. The terminal assistance information carries indication information, wherein the indication information indicates that the terminal device has stored the related information.

In order to implement the above method for information feedback, an embodiment of the present invention further provides a network device. A composition structure of the network device 500, as shown in FIG. 12, includes: a second receiving unit 501, configured to receive related information of abnormally returning to an idle state sent by a terminal device; the related information is acquired by the terminal device when the terminal device returns to the idle state abnormally, and is sent in a case that a connection is re-established with the network device.

In some embodiments, abnormally returning to the idle state includes: the terminal device returns to the idle state due to a failure of performing a re-establishment.

In a case that abnormally returning to the idle state is that the terminal device returns to the idle state due to the failure of performing the re-establishment, the related information includes at least one of the following: a reason for invalidation of a re-establishment timer is that the re-establishment timer is expired, location information when the re-establishment timer is expired, time stamp information when the re-establishment timer is expired, or measurement information of a serving cell and/or a neighboring cell. Or, the related information includes at least one of the following: a re-establishment cell identifier, a reason why the terminal device returns to the idle state, a preamble used by the terminal device to send a re-establishment request message to the network device, an SSB used by the terminal device to send the re-establishment request message to the network device, a maximum transmit power used by the terminal device to send a re-establishment request message to the network device, or the number of attempts of a preamble on the SSB. Herein, the reason why the terminal device returns to the idle state includes: a re-establishment message receiving timer is expired, or the terminal device has not received a re-establishment message. Or, the related information includes at least one of the following: the reason why the terminal device returns to the idle state is Integrity Protection failure of a re-establishment message, the re-establishment cell identifier with Integrity Protection failure, a PCI and/or an ARFCN, an Integrity Protection key that has been stored by the terminal device, or an NCC. Or, the related information also includes at least one of the following: the reason why the terminal device returns to the idle state is Integrity Protection failure of a connection resume message, a resume cell identifier with Integrity Protection failure, the PCI and/or the ARFCN of a resume cell, the Integrity Protection key that has been stored by the terminal device, or the NCC.

In some other embodiments, abnormally returning to the idle state includes: the terminal device directly returns to the idle state from an inactive state.

When abnormally returning to the idle state is that the terminal device directly returns to the idle state from the inactive state, the related information includes at least one of the following: the reason why the terminal device returns to the idle state is Integrity Protection failure of the connection resume message, the re-establishment cell identifier with Integrity Protection failure, the PCI and/or the ARFCN, the Integrity Protection key that has been stored by the terminal device, or the NCC. Or, when the terminal device receives a core network paging in the inactive state, the related information includes at least one of the following: serving cell information of the terminal device, wireless area information under the inactive state, or measurement information of a serving cell and/or a neighboring cell. Or, the related information also includes at least one of the following: the reason why the terminal device returns to the idle state is Integrity Protection failure of the connection resume message, the resume cell identifier with Integrity Protection failure, the PCI and/or the ARFCN of the resume cell, the Integrity Protection key that has been stored by the terminal device, or the NCC.

In an embodiment of the present invention, current serving cell information of the terminal device includes: a current serving cell identifier of the terminal device.

In an embodiment of the present invention, the wireless area information includes: a wireless area identifier, and/or a cell identifier contained in a wireless area.

In an embodiment of the present invention, the measurement information includes: a measurement parameter for a cell, and/or a measurement parameter for a strongest beam of the cell. Among them, the measurement parameter includes at least one of the following: an RSRP, an RSRQ, or an SINR.

In an embodiment of the present invention, the second receiving unit 501 is configured to receive terminal information reported by the terminal device, wherein the terminal information carries the related information.

In an embodiment of the present invention, the network device 500 further includes: a second sending unit 502, configured to send a reconfiguration message to the terminal device; the second receiving unit is further configured to receive terminal assistance information; the terminal assistance information carries indication information, and is sent by the terminal device based on the reconfiguration message, wherein the indication information indicates that the terminal device has stored the related information.

An embodiment of the present invention further provides a terminal device, including a processor and a memory configured to store a computer program which is capable of being run on the processor, wherein the processor is configured to perform the acts of the above method for information feedback performed by the terminal device, when running the computer program.

An embodiment of the present invention further provides a network device, including a processor and a memory configured to store a computer program which is capable of being run on the processor, wherein the processor is configured to perform the acts of the above method for information feedback performed by the network device, when running the computer program.

FIG. 13 is a schematic diagram of a hardware structure of an electronic device (a terminal device or a network device) according to an embodiment of the present invention. An electronic device 700 includes: at least one processor 701, a memory 702, and at least one network interface 704. Various components in the electronic device 700 are coupled together by a bus system 705. It may be understood that the bus system 705 is used for implementing connection and communication between these components. In addition to a data bus, the bus system 705 also includes a power bus, a control bus, and a status signal bus. However, for clarity, all kinds of buses are uniformly referred to as the bus system 705 in FIG. 13.

It can be understood that the memory 702 may be a volatile memory or a non-volatile memory, or may include both the volatile memory and the non-volatile memory. Herein, the non-volatile memory may be a Read Only Memory (ROM), a Programmable Read-Only Memory (PROM), an Erasable Programmable Read-Only Memory (EPROM), an Electrically Erasable Programmable Read-Only Memory (EEPROM), a ferromagnetic random access memory (FRAM), a Flash Memory, a magnetic surface memory, a compact disk, or a Compact Disc Read-Only Memory (CD-ROM); the magnetic surface memory may be a magnetic disk memory or a magnetic tape memory. The transitory memory may be a Random Access Memory (RAM) which serves as an external cache. By way of exemplary but not restrictive illustrations, many forms of RAMs are available, such as a Static Random Access Memory (SRAM), a Synchronous Static Random Access Memory (SSRAM), a Dynamic Random Access Memory (DRAM), a Synchronous Dynamic Random Access Memory (SDRAM), a Double Data Rate Synchronous Dynamic Random Access Memory (DDRSDRAM), an Enhanced Synchronous Dynamic Random Access Memory (ESDRAM), a SyncLink Dynamic Random Access Memory (SLDRAM), a Direct Rambus Random Access Memory (DRRAM). The memory 702 described in an embodiment of the present invention is intended to include, but is not limited to, these and any other suitable types of memories.

The memory 702 in the embodiment of the present invention is configured to store various types of data to support operations of the electronic device 700. Examples of such data include any computer program for operating on the electronic device 700, such as an application 7022. A program for implementing the method of an embodiment of the present invention may be contained in the application 7022.

Methods disclosed in above embodiments of the present invention may be applied to the processor 701 or implemented by the processor 701. The processor 701 may be an integrated circuit chip with a signal processing capability. In an implementation process, the acts of the methods described above may be accomplished by integrated logic circuits of hardware in the processor 701 or instructions in a form of software. The above processor 701 may be a general purpose processor, a Digital Signal Processor (DSP), or other programmable logic devices, a discrete gate or transistor logic device, or a discrete hardware component, etc. The processor 701 may implement or execute the methods, acts and logical block diagrams disclosed in the embodiments of the present invention. The general purpose processor may be a microprocessor or any conventional processor or the like. Acts of the methods disclosed in combination with the embodiments of the present invention may be directly embodied as being executed and accomplished by a hardware decoding processor or by a combination of hardware and software modules in a decoding processor. The software module may be located in a storage medium, and the storage medium is located in the memory 702. The processor 701 reads information in the memory 702 and accomplishes the acts of the aforementioned methods in combination with hardware thereof.

In an exemplary embodiment, an electronic device 700 may be implemented by one or more Application Specific Integrated Circuits (ASICs), DSPs, Programmable Logic Devices (PLDs), Complex Programmable Logic Devices (CPLDs), FPGAs, general-purpose processors, controllers, MCUs, MPUs or other electronic components, for executing the aforementioned methods.

An embodiment of the present application further provides a storage medium configured to store a computer program.

Optionally, the storage medium may be applied to the terminal device in an embodiment of the present application, and the computer program enables the computer to execute corresponding flow in each method in an embodiment of the present application, which will not be repeated here for brevity.

The present invention is described with reference to flowcharts and/or block diagrams of methods, devices (systems), and computer program products according to embodiments of the present invention. It should be understood that each flow and/or block in the flowchart and/or block diagram, and combinations of flows and/or blocks in the flowchart and/or block diagram can be implemented by computer program instructions. These computer program instructions may be provided to a general purpose computer, a special purpose computer, an embedded processor or a processor of other programmable data processing device to produce a machine, such that the instructions which are executed by the computer or the processor of other programmable data processing device produce apparatus for implementing the functions specified in one or more flows of the flowchart and/or one or more blocks of the block diagram.

These computer program instructions may also be stored in a computer-readable memory that can direct a computer or other programmable data processing device to operate in a specific manner, such that the instructions stored in the computer-readable memory produce an article of manufacture including instruction apparatus that implement the functions specified in one or more flows of the flowchart and/or one or more blocks of the block diagram.

These computer program instructions may also be loaded onto a computer or other programmable data processing device, such that a series of operational acts are performed on the computer or other programmable device to produce a computer-implemented processing, thereby the instructions which are executed on the computer or other programmable device are used for implementing acts of the functions specified in one or more flows of the flowchart and/or one or more blocks of the block diagram.

The above descriptions are only preferred embodiments of the present invention and are not intended to limit the scope of protection of the present invention. Any modification, equivalent substitution, improvement, etc. made within the spirit and principles of the present invention shall be included within the protection scope of the present invention.

## Claims

1. A method for information feedback, comprising:
acquiring, by a terminal device, related information of abnormally returning to an idle state in a case that the terminal device returns to the idle state abnormally; and
sending, by the terminal device, the related information to a network device when the terminal device re-establishes a connection with the network device.

2. The method of claim 1, wherein abnormally returning to the idle state comprises:
the terminal device returns to the idle state due to a failure of performing a re-establishment.

3. The method of claim 1, wherein abnormally returning to the idle state comprises:
the terminal device directly returns to the idle state from an inactive state.

4. The method of claim 1 or 2, wherein the related information comprises at least one of the following:
a reason for invalidation of a re-establishment timer is that the re-establishment timer is expired;
location information when the re-establishment timer is expired;
time stamp information when the re-establishment timer is expired; or,
measurement information of a serving cell and/or a neighboring cell.

5. The method of claim 1 or 2, wherein the related information comprises at least one of the following:
a re-establishment cell identifier;
a reason why the terminal device returns to the idle state;
a preamble used by the terminal device to send a re-establishment request message to the network device;
a Synchronization Signal Block (SSB) used by the terminal device to send the re-establishment request message to the network device;
a maximum transmit power used by the terminal device to send the re-establishment request message to the network device;
a number of attempts of a preamble on the SSB;
wherein the reason why the terminal device returns to the idle state comprises: a re-establishment message receiving timer is expired, or the terminal device has not received a re-establishment message.

6. The method of claim 1 or 2, wherein the related information further comprises at least one of the following:
a reason why the terminal device returns to the idle state is Integrity Protection failure of a re-establishment message;
a re-establishment cell identifier with Integrity Protection failure;
a Physical Cell ID (PCI) and/or a frequency point Absolute Radio Frequency Channel Number (ARFCN) of a re-establishment cell;
an Integrity Protection key that has been stored by the terminal device; or,
a Next Hop Chaining Count (NCC).

7. The method of claim 1 or 3, wherein the related information further comprises at least one of the following:
a reason why the terminal device returns to the idle state is Integrity Protection failure of a connection resume message;
a resume cell identifier with Integrity Protection failure;
a Physical Cell ID (PCI) and/or a frequency point Absolute Radio Frequency Channel Number (ARFCN) of a resume cell;
an Integrity Protection key that has been stored by the terminal device; or,
an NCC.

8. The method of claim 1 or 3, wherein when the terminal device receives a core network paging in an inactive state, the related information comprises at least one of the following:
service cell information of the terminal device;
wireless area information under an inactive state; or,
measurement information of a serving cell and/or a neighboring cell.

9. The method of claim 8, wherein serving cell information of the terminal device comprises:
a service cell identifier of the terminal device.

10. The method of claim 8 or 9, wherein the wireless area information comprises:
a wireless area identifier, and/or a cell identifier contained in a wireless area.

11. The method of any one of claims 4, 8 to 10, wherein the measurement information comprises:
a measurement parameter for a cell, and/or a measurement parameter for a strongest beam of the cell.

12. The method of claim 11, wherein the measurement information comprises at least one of the following:
a Reference Signal Receiving Power (RSRP), a Reference Signal Receiving Quality (RSRQ), or a Signal to Interference plus Noise Ratio (SINR).

13. The method of any one of claims 1 to 12, wherein sending, by the terminal device, the related information to the network device comprises:
reporting, by the terminal device, terminal information to the network device, wherein the terminal information carries the related information.

14. The method of claim 13, further comprising:
receiving, by the terminal device, a reconfiguration message sent by the network device;
sending, by the terminal device, terminal assistance information to the network device based on the reconfiguration message; wherein the terminal assistance information carries indication information, the indication information indicates that the terminal device has stored the related information.

15. A method for information feedback, comprising:
receiving, by a network device, related information of abnormally returning to an idle state sent by a terminal device;
wherein the related information is acquired by the terminal device when the terminal device returns to the idle state abnormally, and is sent in a case that a connection is re-established with the network device.

16. The method of claim 15, wherein abnormally returning to the idle state comprises:
the terminal device returns to the idle state due to a failure of performing a re-establishment.

17. The method of claim 15, wherein abnormally returning to the idle state comprises:
the terminal device directly returns to the idle state from an inactive state.

18. The method of claim 15 or 16, wherein the related information comprises at least one of the following:
a reason for invalidation of a re-establishment timer is that the re-establishment timer is expired;
location information when the re-establishment timer is expired;
time stamp information when the re-establishment timer is expired; or,
measurement information of a serving cell and/or a neighboring cell.

19. The method of claim 15 or 16, wherein the related information comprises at least one of the following:
a re-establishment cell identifier;
a reason why the terminal device returns to the idle state;
a preamble used by the terminal device to send a re-establishment request message to the network device;
a Synchronization Signal Block (SSB) used by the terminal device to send the re-establishment request message to the network device;
a maximum transmit power used by the terminal device to send the re-establishment request message to the network device;
a number of attempts of a preamble on the SSB;
wherein the reason why the terminal device returns to the idle state comprises: a re-establishment message receiving timer is expired, or the terminal device has not received a re-establishment message.

20. The method of claim 15 or 16, wherein the related information further comprises at least one of the following:
a reason why the terminal device returns to the idle state is Integrity Protection failure of a re-establishment message;
a re-establishment cell identifier with Integrity Protection failure;
a Physical Cell ID (PCI) and/or a frequency point Absolute Radio Frequency Channel Number (ARFCN) of a re-establishment cell;
an Integrity Protection key that has been stored by the terminal device; or,
a Next Hop Chaining Count (NCC).

21. The method of claim 15 or 17, wherein the related information further comprises at least one of the following:
a reason why the terminal device returns to the idle state is Integrity Protection failure of a connection resume message;
a resume cell identifier with Integrity Protection failure;
a Physical Cell ID (PCI) and/or a frequency point Absolute Radio Frequency Channel Number (ARFCN) of a resume cell;
an Integrity Protection key that has been stored by the terminal device; or,
an NCC.

22. The method of claim 15 or 17, wherein when the terminal device receives a core network paging in an inactive state, the related information comprises at least one of the following:
service cell information of the terminal device;
wireless area information under an inactive state; or,
measurement information of a serving cell and/or a neighboring cell.

23. The method of claim 22, wherein serving cell information of the terminal device comprises:
a service cell identifier of the terminal device.

24. The method of claim 22 or 23, wherein the wireless area information comprises:
a wireless area identifier, and/or a cell identifier contained in a wireless area.

25. The method of any one of claims 18, 22, to 24, wherein the measurement information comprises:
a measurement parameter for a cell, and/or a measurement parameter for a strongest beam of the cell.

26. The method of claim 25, wherein the measurement information comprises at least one of the following:
a Reference Signal Receiving Power (RSRP), a Reference Signal Receiving Quality (RSRQ), or a Signal to Interference plus Noise Ratio (SINR).

27. The method of any one of claims 15 to 26, wherein receiving, by the network device, the related information of returning to the idle state sent by the terminal device comprises:
receiving, by the network device, terminal information reported by the terminal device, wherein the terminal information carries the related information.

28. The method of claim 27, further comprising:
sending, by the network device, a reconfiguration message to the terminal device;
receiving, by the network device, terminal assistance information;
wherein the terminal assistance information carries indication information, and is sent by the terminal device based on the reconfiguration message, the indication information indicates that the terminal device has stored the related information.

29. A terminal device, comprising:
a processing unit, configured to acquire related information of abnormally returning to an idle state when the terminal device returns to the idle state abnormally; and
a first sending unit, configured to send the related information to a network device in a case that the terminal device re-establishes a connection with the network device.

30. The terminal device of claim 29, wherein abnormally returning to the idle state comprises:
the terminal device returns to the idle state due to a failure of performing a re-establishment.

31. The terminal device of claim 29, wherein abnormally returning to the idle state comprises:
the terminal device directly returns to the idle state from an inactive state.

32. The terminal device of claim 29 or 30, wherein the related information comprises at least one of the following:
a reason for invalidation of a re-establishment timer is that the re-establishment timer is expired;
location information when the re-establishment timer is expired;
time stamp information when the re-establishment timer is expired; or,
measurement information of a serving cell and/or a neighboring cell.

33. The terminal device of claim 29 or 30, wherein the related information comprises at least one of the following:
a re-establishment cell identifier;
a reason why the terminal device returns to the idle state;
a preamble used by the terminal device to send a re-establishment request message to the network device;
a Synchronization Signal Block (SSB) used by the terminal device to send the re-establishment request message to the network device;
a maximum transmit power used by the terminal device to send the re-establishment request message to the network device; or
a number of attempts of a preamble on the SSB;
wherein the reason why the terminal device returns to the idle state comprises: a re-establishment message receiving timer is expired, or the terminal device has not received a re-establishment message.

34. The terminal device of claim 29 or 30, wherein the related information comprises at least one of the following:
a reason why the terminal device returns to the idle state is Integrity Protection failure of a re-establishment message;
a re-establishment cell identifier with Integrity Protection failure;
a Physical Cell ID (PCI) and/or a frequency point Absolute Radio Frequency Channel Number (ARFCN) of a re-establishment cell;
an Integrity Protection key that has been stored by the terminal device; or,
a Next Hop Chaining Count (NCC).

35. The terminal device of claim 29 or 31, wherein the related information comprises at least one of the following:
a reason why the terminal device returns to the idle state is Integrity Protection failure of a connection resume message;
a resume cell identifier with Integrity Protection failure;
a Physical Cell ID (PCI) and/or a frequency point Absolute Radio Frequency Channel Number (ARFCN) of a resume cell;
an Integrity Protection key that has been stored by the terminal device; or,
an NCC.

36. The terminal device of claim 29 or 31, wherein when the terminal device receives a core network paging in an inactive state, the related information comprises at least one of the following:
service cell information of the terminal device;
wireless area information under an inactive state; or,
measurement information of a serving cell and/or a neighboring cell.

37. The terminal device of claim 36, wherein serving cell information of the terminal device comprises:
a service cell identifier of the terminal device.

38. The terminal device of claim 36 or 37, wherein the wireless area information comprises:
a wireless area identifier, and/or a cell identifier contained in a wireless area.

39. The terminal device of any one of claims 32, 36 to 38, wherein the measurement information comprises:
a measurement parameter for a cell, and/or a measurement parameter for a strongest beam of the cell.

40. The terminal device of claim 39, wherein the measurement parameter comprises at least one of the following:
a Reference Signal Receiving Power (RSRP), a Reference Signal Receiving Quality (RSRQ), or a Signal to Interference plus Noise Ratio (SINR).

41. The terminal device of any one of claims 29 to 40, wherein the first sending unit is configured to report terminal information to the network device, wherein the terminal information carries the related information.

42. The terminal device of claim 41, wherein the terminal device further comprises a first receiving unit, configured to receive a reconfiguration message sent by the network device; and
the first sending unit is configured to send terminal assistance information to the network device based on the reconfiguration message; wherein the terminal assistance information carries indication information, the indication information indicates that the terminal device has stored the related information.

43. A network device, comprising:
a second receiving unit, configured to receive related information of abnormally returning to an idle state sent by a terminal device;
wherein the related information is acquired by the terminal device when the terminal device returns to the idle state abnormally, and is sent in a case that a connection is re-established with the network device.

44. The network device of claim 43, wherein abnormally returning to the idle state comprises:
the terminal device returns to the idle state due to a failure of performing a re-establishment.

45. The network device of claim 43, wherein abnormally returning to the idle state comprises:
the terminal device directly returns to the idle state from an inactive state.

46. The network device of claim 43 or 44, wherein the related information comprises at least one of the following:
a reason for invalidation of a re-establishment timer is that the re-establishment timer is expired;
location information when the re-establishment timer is expired;
time stamp information when the re-establishment timer is expired; or,
measurement information of a serving cell and/or a neighboring cell.

47. The network device of claim 43 or 44, wherein the related information comprises at least one of the following:
a re-establishment cell identifier;
a reason why the terminal device returns to the idle state;
a preamble used by the terminal device to send a re-establishment request message to the network device;
a Synchronization Signal Block (SSB) used by the terminal device to send the re-establishment request message to the network device;
a maximum transmit power used by the terminal device to send the re-establishment request message to the network device;
a number of attempts of a preamble on the SSB;
wherein the reason why the terminal device returns to the idle state comprises: a re-establishment message receiving timer is expired, or the terminal device has not received a re-establishment message.

48. The network device of claim 43 or 44, wherein the related information comprises at least one of the following:
a reason why the terminal device returns to the idle state is Integrity Protection failure of a re-establishment message;
a re-establishment cell identifier with Integrity Protection failure;
a Physical Cell ID (PCI) and/or a frequency point Absolute Radio Frequency Channel Number (ARFCN) of a re-establishment cell;
an Integrity Protection key that has been stored by the terminal device; or,
a Next Hop Chaining Count (NCC).

49. The network device of claim 43 or 45, wherein the related information comprises at least one of the following:
a reason why the terminal device returns to the idle state is Integrity Protection failure of a connection resume message;
a resume cell identifier with Integrity Protection failure;
a Physical Cell ID (PCI) and/or a frequency point Absolute Radio Frequency Channel Number (ARFCN) of a resume cell;
an Integrity Protection key that has been stored by the terminal device; or,
an NCC.

50. The network device of claim 43 or 45, wherein when the terminal device receives a core network paging in an inactive state, the related information comprises at least one of the following:
service cell information of the terminal device;
wireless area information under an inactive state; or,
measurement information of a serving cell and/or a neighboring cell.

51. The network device of claim 50, wherein serving cell information of the terminal device comprises:
a service cell identifier of the terminal device.

52. The network device of claim 50 or 51, wherein the wireless area information comprises:
a wireless area identifier, and/or a cell identifier contained in a wireless area.

53. The network device of any one of claims 46, 50 to 52, wherein the measurement information comprises:
a measurement parameter for a cell, and/or a measurement parameter for a strongest beam of the cell.

54. The network device of claim 53, wherein the measurement parameter comprises at least one of the following:
a Reference Signal Receiving Power (RSRP), a Reference Signal Receiving Quality (RSRQ), or a Signal to Interference plus Noise Ratio (SINR).

55. The network device of any one of claims 43 to 54, wherein the second receiving unit is configured to receive terminal information reported by the terminal device, wherein the terminal information carries the related information.

56. The network device of claim 55, wherein the network device further comprises:
a second sending unit, configured to send a reconfiguration message to the terminal device;
the second receiving unit is further configured to receive terminal assistance information;
wherein the terminal assistance information carries indication information, and is sent by the terminal device based on the reconfiguration message, the indication information indicates that the terminal device has stored the related information.

57. A terminal device, comprising: a processor and a memory for storing a computer program that is capable of being run on the processor; wherein,
the processor is configured to, when running the computer program, execute acts of the method for information feedback of any one of claims 1 to 14.

58. A network device, comprising: a processor and a memory configured to store a computer program that is capable of being run on the processor; wherein,
the processor is configured to, when running the computer program, execute acts of the method for information feedback of any one of claims 15 to 28.

59. A storage medium, storing an executable program which, when executed by a processor, implements the method for information feedback of any one of claims 1 to 14.

60. A storage medium, storing an executable program which, when executed by a processor, implements the method for information feedback of any one of claims 15 to 28.
